# EUROPEAN PATENT SPECIFICATION

(11) **EP 0 653 567 B1**
(45) Date of publication and mention of the grant of the patent: **29.04.1998**
(21) Application number: 94116256.2
(22) Date of filing: 14.10.1994
(51) Int. Cl.: F15B 5/00, G05D 16/20

(54) **Electricity/air pressure converter**
Elektropneumatischer Wandler
Convertisseur électro-pneumatique

(30) Priority: 15.10.1993 JP 257419/93
(43) Date of publication of application: 17.05.1995
(73) Proprietor: Yokogawa Electric Corporation, Tokyo 180 (JP)
(72) Inventor: Nishijima, Takashi, Kodaira-shi, Tokyo 187 (JP); Kimura, Atsushi, Akikawa-shi, Tokyo 197 (JP); Kasahara, Yasuo, Kodaira-shi, Tokyo 197 (JP); Tsuchiya, Masahito, Mitaku-shi, Tokyo 181 (JP)
(74) Representative: Henkel, Feiler, Hänzel

(56) References cited:
- EP-A- 0 084 214
- EP-A- 0 088 371
- WO-A-93/22715
- US-A- 3 645 293

## Description

### BACKGROUND OF THE INVENTION

### 1. Field of the Invention

The present invention relates to an electricity/air pressure converter for converting an electrical signal into an air pressure signal corresponding thereto and, more particularly, to an electricity/air pressure converter which has been improved to be more stable, compact and inexpensive.

### 2. Description of the Related Art

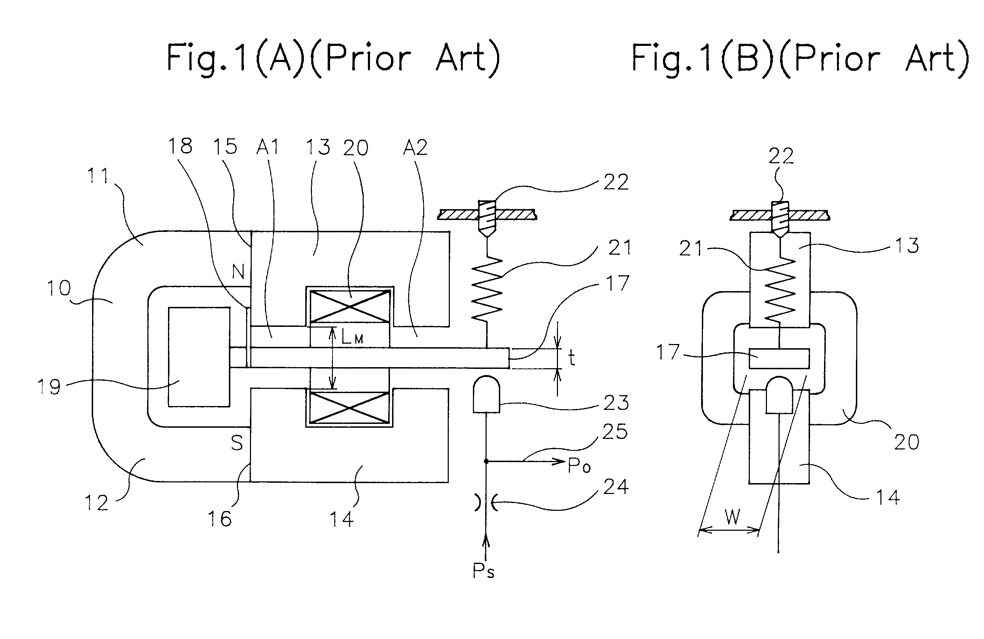

Fig. 1 shows a configuration of a conventional electricity/air pressure converter. Fig. 1(A) is a longitudinal sectional view and Fig. 1(B) is a right side view of the same converter. This configuration is disclosed in Japanese unexamined patent publication No. H4-73401 titled "Electricity/Air Pressure Converter" which will now be briefly described because the improvements according to the present invention is made based on this configuration.

10 designates a U-shaped permanent magnet having an upper leg portion 11 which is the n-pole and a lower leg portion 12 which is the s-pole.

Sides 15 and 16 of a pair of U-shaped yokes 13 and 14 made of a soft magnetic material are secured to these leg portions 11 and 12, respectively, with a constant space L_{M} maintained therebetween. Accordingly, leg portions of the yokes 13 and 14 define spaces A₁ and A₂ which are equal to each other.

A movable piece 17 made of a soft magnetic material is disposed so that it extends through the spaces A₁ and A₂ in the middle thereof. The movable piece 17 is secured to the side 15 of the yoke 13 in the vicinity of one end thereof by means of a spring member 18 made of a non-magnetic material such as beryllium copper to be rotatable about this point.

Thus, the movable piece 17 has a configuration which is asymmetric about the center thereof and is dynamically off balance. Therefore, a counter weight 19 is secured to one end of the yoke 13. In an internal space defined by the pair of U-shaped yokes 13 and 14 facing each other, a coil 20 is retained so that it surrounds the movable piece 17 with a space maintained therebetween.

One side of the other end of the movable piece 17 is secured with a securing pin 22 through a spring member 21, and a nozzle 23 is disposed so that it faces the other side of this end of the movable piece 17 with a small gap therebetween.

This nozzle 23 is supplied with a supply air pressure Pₛ through a restrictor 24, and an output air pressure Pₒ is obtained as a back pressure of the nozzle between the restrictor 24 and the nozzle 23 through a conduit 25.

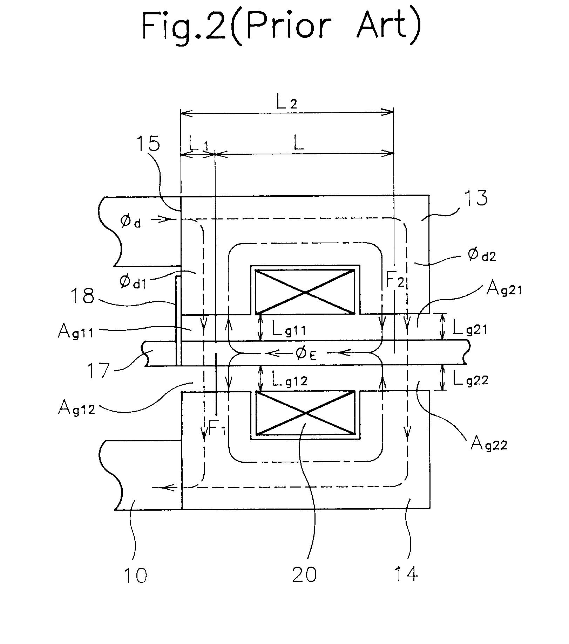

The operation of the conventional electricity/air pressure converter having the above-described configuration will now be described with reference to Fig. 2 illustrating the operation.

In the space A₁, an air gap length L_{g11} is formed between one leg portion of the yoke 13 and the movable piece 17 and an air gap length L_{g12} is formed between one leg portion of the yoke 14 and the movable piece 17. In the space A₂, an air gap length L_{g21} is formed between the other leg portion of the yoke 13 and the movable piece 17 and an air gap length L_{g22} is formed between the other leg portion of the yoke 14 and the movable piece 17.

In each of air gaps A_{g11}, A_{g12}, A_{g21} and A_{g22} defined by the air gap lengths L_{g11}, L_{g12}, L_{g21} and L_{g22}, there exists magnetic flux φ_{E} which is generated by magnetic flux φ_{d} generated by the permanent magnet 10 and an input current I flowing through the coil 20.

The magnetic flux φ_{d} flows from the n-pole of the permanent magnet 10 to the s-pole thereof through each of the air gaps A_{g11}, A_{g12}, A_{g21} and A_{g22} while the magnetic flux φ_{E} is the sum of, for example, magnetic flux flowing through the air gaps A_{g11} and A_{g12} and the movable piece 17 and magnetic flux flowing through the air gaps A_{g21} and A_{g22} and the movable piece 17 as indicated by the arrow.

Therefore, if the input current I is zero, the magnetic fields formed in the air gaps A_{g21} and A_{g22} are equal in strength because they have only the magnetic flux φ_{d} generated by the permanent magnet 10. Since a magnetic attracting force in an air gap is proportionate to the square of the strength of the magnetic field, the movable piece 17 resides in the middle of the space L_{M}.

On the other hand, since the movable piece 17 is secured at a point in the vicinity of one end thereof by means of the spring member 18, the movable piece 17 moves about this point which serves as a supporting point. Therefore, as the input current I flows through the coil 20, the magnetic flux φ_{E} generated by the input current I is added to the magnetic flux φ_{d} (φ_{d} + φ_{E}) in the air gap A_{g21} while it is subtracted from the magnetic flux φ_{d} (φ_{d} - φ_{E}) in the air gap A_{g22}. As a result, an upward force F₂ acts on the movable piece 17 in this air gap as illustrated.

Since the air gap A_{g11} has the magnetic flux (φ_{d} - φ_{E}) and the air gap A_{g12} has the magnetic flux (φ_{d} + φ_{E}), a downward force F₂ acts on the movable piece 17 in this air gap which is closer to the supporting point as illustrated.

Since the lengths of the air gaps L_{g11}, L_{g12}, L_{g21} and L_{g22} are equal, the forces F₁ and F₂ are equal in magnitude and opposite to each other in direction. The force in each air gap is proportionate to the square of the magnetic flux therein. Therefore, the following equation is derived.${\text{F}}_{\text{1}} {\text{= F}}_{\text{2}} {\text{∝ (φ}}_{\text{d}} {\text{+ φ}}_{\text{E}} {\text{)}}^{\text{2}} {\text{- (φ}}_{\text{d}} {\text{- φ}}_{\text{E}} {\text{)}}^{\text{2}}$

The forces generated can be expressed as follows:${\text{F}}_{\text{1}} {\text{= F}}_{\text{2}} {\text{= K}}_{\text{M}} {\text{φ}}_{\text{d}} {\text{φ}}_{\text{E}}$ where K_{M} represents a proportion constant.

Although the movable piece 17 is slightly displaced when the input current I flows, the displacement is ignored here because it is normally on the order of 5 to 50 µm and L_{g} is normally on the order of 1 to 2 mm.

As a result, rotational torque T as given by the following equation is generated on the movable piece 17 counterclockwise about the spring member 18 to move the movable piece 17 toward the yoke 13.${\text{T = F}}_{\text{2}} {\text{· L}}_{\text{2}} {\text{- F}}_{\text{1}} {\text{· L}}_{\text{1}} {\text{= F(L}}_{\text{2}} {\text{- L}}_{\text{1}} \text{) = F·L}$ where F = F₁ = F₂ and L = L₂ = L₁.

As the movable piece 17 moves toward the yoke 13, the space between the nozzle 23 and the movable piece 17 expands, reducing the back pressure of the nozzle and, consequently, reducing the output air pressure Pₒ. Thus, an output air pressure Pₒ corresponding to the input current I is obtained.

However, the electricity/air pressure converter as described above has problems as follows.
(a) The torque T generated is expressed by the following equation.${\text{T = K}}_{\text{M}} {\text{· φ}}_{\text{E}} {\text{· φ}}_{\text{d}} \text{· L}$
   Further, the magnetic flux φ_{E} generated by the coil 20 can be expressed as follows.${\text{φ}}_{\text{E}} {\text{= N · I/(RL}}_{\text{g}} {\text{+ R}}_{\text{yo}} {\text{+ R}}_{\text{m}} \text{)} {\text{= (N · I/RL}}_{\text{g}} {\text{)/[1 + (R}}_{\text{yo}} {\text{+ R}}_{\text{m}} {\text{)/RL}}_{\text{g}} \text{]}$ where RL_{g} represents the magnetic resistance of the air gap; R_{yo} represents the magnetic resistance of the yoke 13; Rₘ represents the magnetic resistance of the movable piece 17; and N represents the number of the turns of the coil 20.
   N and RL_{g} are constant while the magnetic resistance Rₘ of the movable piece 17 and the magnetic resistance R_{yo} of the yoke 13 include some error relative to the input current I because of the non-linearity and hysteresis of the soft magnetic materials from which those parts are formed.
   Since the magnetic flux φ_{E} generated by the coil 20 flows through the movable piece 17 in the direction indicated by the dashed line in the figure, i.e., in a direction in parallel with the central axis of the coil 20, the magnetic resistance Rₘ of the movable piece 17 is increased as a sectional area S (= t · w) of the movable piece 17 in the direction perpendicular to the direction of the flow is decreased.
   As a result, the ratio of the magnetic resistance Rₘ to the magnetic flux φ_{E} is increased as apparent from Equation 5. This increases the influence of the non-linearity and hysteresis of the movable piece 17 made of a soft magnetic material, thereby increasing the error in the generated torque relative to the input current I.
   If the sectional area S is decreased below a predetermined value, magnetic flux density B_{E} = φ_{E}/S approaches the saturation magnetic flux density of the soft magnetic material and, as a result, the linear relationship between the input current I and the output torque T is completely lost.
   Further, if the width w of the movable piece 17 is decreased, the magnetic resistance RL_{g} is increased at each of the air gaps. If the magnetomotive forces of the coil 20 and the permanent magnet 10 are equal, this results in decreases in φ_{E} and φ_{d}, thereby reducing conversion efficiency (generated torque divided by input current). Accordingly, vulnerability to disturbances is increased and stability is reduced.
   From the reason as described above, the sectional area S of the movable piece 17 can not be decreased below a predetermined value and, needless to say, it is difficult to reduce the mass of the same part below a predetermined value. Therefore, this part can not be reduced in the overall size thereof and has poor anti-vibration and anti-shock characteristics.
   In addition, since the resonance frequency can not be increased beyond a predetermined value and a movable portion having large inertia is controlled by a force smaller than a predetermined value, this part has poor controllability and is difficult to operate stably.
(b) Many magnetic paths through which leakage flux flows are formed around each of the air gaps and at the sides of the yokes 13 and 14 other than the air gaps, and the converter is not continuously covered by a magnetic material on the entire surface thereof. This results in a problem in that the output of the converter can be adversely affected by any external magnetic material placed in the vicinity thereof or any magnetic field which exists externally to the converter.
   To cover the entire converter with a magnetic material to magnetically shield it for the purpose of reducing such an effect, the magnetic material must be sufficiently spaced from the converter so that it does not affect the magnetic flux at the air gaps. This increases the size of the converter as a whole and the number of components, making it difficult to provide a converter which is compact and inexpensive and which is stable against magnetic disturbances.
(c) The movable piece 17 is secured to the yoke 13 through the spring member 18 and rotates about it. The spring member 21 and the securing pin 22 are provided on the other end of the movable piece 17 in order to maintain the overall spring constant above a predetermined value and to adjust the position of the movable piece 17 relative to the pair of yokes 13 and 14.
   It is necessary to fabricate the movable piece 17 and the yokes 13 and 14 using soft magnetic materials and the spring members 18 and 21 using non-magnetic materials such as beryllium copper or materials which have some magnetism but with low magnetic permeability and a small coercive force such as spring materials of an austenited stainless steel type.
   Securing points wherein materials of different types are secured together are required between the spring member 18 and the movable piece 17, between the spring member 18 and the yokes 13 and 14, and between the movable piece 17 and the spring member 21. Any positional shift in such points can significantly adversely affect the stability of the output because such a shift gives disturbance torque directly to the movable piece 17 and the direction of the shift coincides with the direction in which the nozzle 23 is displaced.
   Although it is therefore desirable to employ a reliable method such as welding for securing them, screwing or soldering is generally employed in consideration of the facts that different types of materials are secured together and that any thermal effect which can deteriorate spring properties and magnetic properties must be avoided.
   However, since different types of materials having different thermal expansion coefficients are involved. it is difficult to maintain high stability because positional shifts can be easily caused by temperature changes.
(d) Since the pair of yokes 13 and 14, the movable piece 17, and the spring members 18 and 21 are configured as separate components, it is difficult to accurately position each of these components. Especially, it is important to position them so that positional accuracy in the vertical direction in Fig. 1 is achieved, i.e. the distances L_{g11}, L_{g12}, L_{g21} and L_{g22} between the yokes 13 and 14 and the movable piece 17 are equal.
   However, the yokes 13 and 14 are disposed with a space therebetween in which the movable piece 17 is rotatably interposed using the spring members 18 and 21 serving as supporting points. It is therefore difficult to define the positional relationship between these components based on only the processing accuracy of them. This results in an increase in the time required for assembling them and, consequently, increases the cost.
(e) Since the movable piece 17 can not be reduced in size below a predetermined value and rotates about a supporting point, the counter weight 19 must be provided to balance the two ends thereof about the supporting point. This increases the overall size of the device, making it difficult to fabricate it at low cost.

This problem has existed also in a commonly used force balance type electricity/air pressure converter wherein an input current of 4 to 20 mA is directly input to the coil 20 or in an electricity/air pressure converter of an electropneumatic positioner.

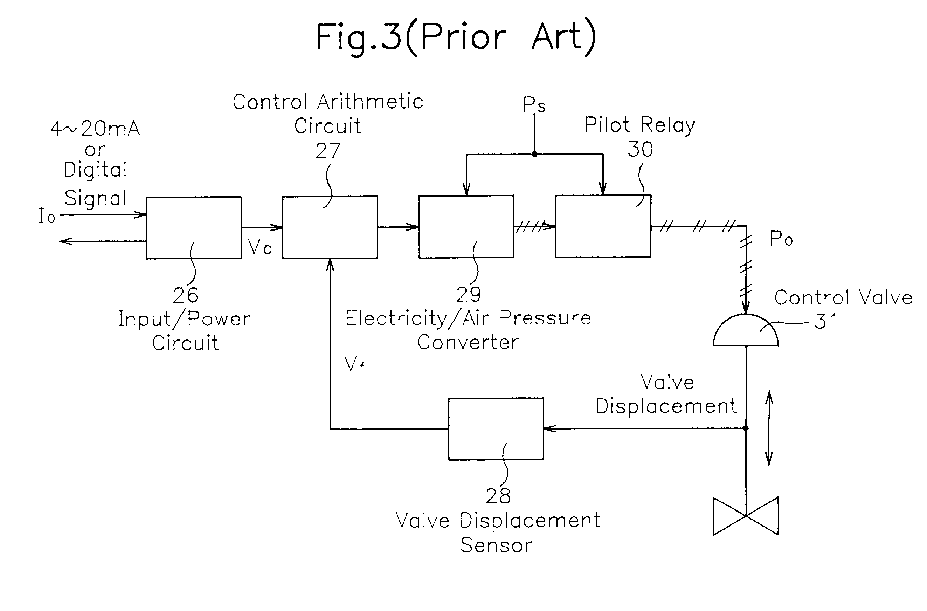

If we take an electropneumatic positioner utilizing an electricity/air pressure converter as described above as a component thereof as an example, the problem is compounded especially in the conventional configuration as shown in Fig. 3. The configuration will now be described.

A current signal Iₒ of 4 to 20 mA or a digital signal such as a field bus is input to an input/power circuit 26 which provides a circuit power supply using the current signal Iₒ and which separates a control voltage V_{c} proportionate to the current signal Iₒ and outputs it to a control arithmetic circuit 27.

The control arithmetic circuit 27 operates the difference between the control voltage V_{c} and a feedback signal V_{f} output by a valve displacement sensor 28 constituted by a potentiometer or the like and outputs the difference to an electricity/air pressure converter 29.

A supply air pressure Pₛ is supplied to the electricity/air pressure converter 29 which is the electricity/air pressure converter as shown in Fig. 1. As a nozzle back pressure, the supply air pressure Pₛ is amplified by a pilot relay 30 and is output to the control valve 31 as an air pressure signal Pₒ.

The control valve 31 is driven according to the air pressure signal Pₒ, and the displacement of the stem which defines the opening of the valve is detected as the displacement of the valve by the valve displacement sensor 28 and is negative-fed-back to the control arithmetic circuit 27 as the feedback signal V_{f}.

Thus, the control arithmetic circuit 27 performs control so that the control voltage V_{c} and the feedback signal V_{f} agree with each other, thereby obtaining valve opening proportionate to the current signal Iₒ.

However, in such a configuration wherein the feedback signal V_{f} is fed back as an electrical signal, the current is consumed also by the control arithmetic circuit 27, the valve displacement sensor 28 and the like. Therefore, there is a limit on the current which can be distributed to the electricity/air pressure converter 29.

As a result, such a configuration has problems such as abnormality in the output thereof caused by fluctuations due to disturbances which can not be corrected especially when the input is small, e.g., about 4 mA.

A prior art electric to fluidic transducer comprising a cylindrical housing containing a fluidic amplifier arranged and an upper portion and a magnetic actuator inside the bottom portion is described in US-A-3645293. The output of the fluidic amplifier is controlled by movement of a diaphragm with respect to an amplifier control nozzle. A permanent magnet magnetically coacts with a magnetizable portion of the diaphragm to provide a predetermined flux density to such portion. An electromagnetic coil is also positioned for magnetic interaction with the magnetizable portion of the diaphragm. A magnetic flux from the permanent magnet flows through the magnetizable member, a core, a bottom plate and returns to the magnet when no current flows through the coil and in this addition the magnetizable member is situated with the magnetic flux. When an alternating current is applied to the electromagnetic coil of the transducer, the generated flux field interacts with that of the permanent magnet to change the flux field effective on the magnetizable portion. This causes the diaphragm to assume a new position with respect to the control nozzle for different current values supplied to the coil, providing an output signal of the fluidic amplifier in accordance with the level of the energizing alternating current to the electromagnetic coil. In this prior art the attractive force depends on the density of the magnetic flux through the magnetizable member and changes in proportion to the square of the magnetic flux so that a non-linear characteristic is present. As the magnetizable member is integrally fixed to the non-magnetic diaphragm so that the gap formed between the core and the nozzle becomes large resulting in a lower efficiency and, since the magnetizable member is fixed to the thin diaphragm, the natural frequency is reduced so that the diaphragm tends to be influenced by mechanical vibrations.

### SUMMARY OF THE INVENTION

It is an object of the present invention to provide an electricity/air pressure converter which is less vulnerable to the influence of non-linearity and hysteresis. It is a second aspect of the present invention to provide a stable electricity/air pressure converter which is excellent in anti-vibration, anti-shock and control characteristics by raising the resonance point through a reduction in the mass thereof. It is a third aspect of the present invention to provide an electricity/air pressure converter which is compact, inexpensive and which is stable against magnetic disturbances. It is a fourth aspect of the present invention to provide an electricity/air pressure converter which is of a low power consumption type.

In order to achieve such object, the present invention employs a configuration comprising the features of claim 1.

### BRIEF DESCRIPTION OF THE DRAWINGS

Fig. 1 is a longitudinal section showing a configuration of a conventional electricity/air pressure converter.

Fig. 2 is an illustration of operational principles for explaining the operation of the electricity/air pressure converter shown in Fig. 1.

Fig. 3 shows a system configuration wherein the electricity/air pressure converter shown in Fig. 1 is used as a part of an electropneumatic positioner.

Fig. 4 is a longitudinal section showing a configuration of a first embodiment of the present invention.

Fig. 5 is a plan view showing a part of the configuration of the embodiment shown in Fig. 4.

Fig. 6 is an illustration of operational principles for explaining the operation of the embodiment shown in Fig. 4.

Fig. 7 is an equivalent magnetic circuit diagram for explaining the operation of the embodiment shown in Fig. 4.

Fig. 8 is another equivalent magnetic circuit diagram for explaining the operation of the embodiment shown in Fig. 4.

Fig. 9 is a longitudinal section of an alternative embodiment which is a partial modification of the configuration of the embodiment shown in Fig. 4.

Fig. 10 is a longitudinal section of another alternative embodiment which is a partial modification of the configuration of the embodiment shown in Fig. 4.

Fig. 11 shows another alternative embodiment which is a partial improvement on the configuration of the embodiment shown in Fig. 4.

Fig. 12 shows a partial alternative embodiment for vibration prevention shown in Fig. 11.

Fig. 13 shows a partial alternative embodiment for the prevention of absorption of magnetic powder shown in Fig. 11.

### DETAILED DESCRIPTION OF THE PREFERRED EMBODIMENTS

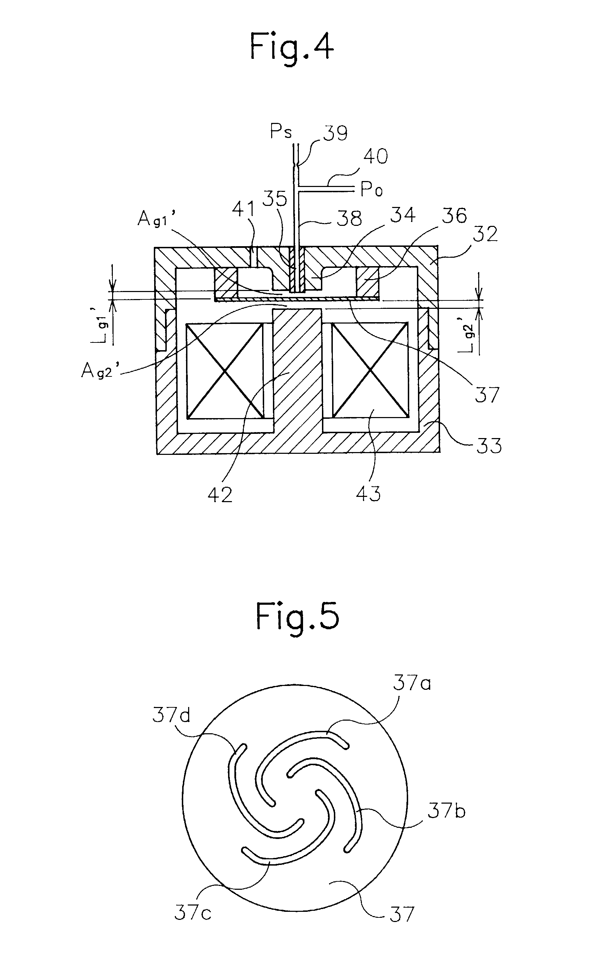

Preferred embodiments of the present invention will now be described with reference to the drawings. Fig. 4 is a longitudinal section showing a configuration of a first embodiment of the present invention wherein 32 designates an upper housing and 33 designates a lower housing. These housings 32 and 33 are both made of a soft magnetic material such as pure iron, ferrite type stainless steel, and permalloy.

The housing 32 has an outer diameter portion in the form of a cylinder and a cylindrical pole piece 34 made of a soft magnetic material which is formed at the center thereof so that it extends inwardly. Further, a nozzle 35 extending through the pole piece 34 from the outside to the inside thereof is formed at the center thereof.

A doughnut-shaped permanent magnet 36 is formed on an inner surface of the housing 32 so that it surrounds the pole piece 34. The permanent magnet 36 is magnetized in the axial direction thereof so that, for example, the side thereof secured to the housing 32 serves as the n-pole and the opposite side serves as the s-pole.

A samarium-cobalt magnet, iron-neodymium magnet or the like having a large energy product is preferably used as the permanent magnet 36 because the length in the direction of magnetization needs not to be so long for such a magnet.

A diaphragm-shaped movable member 37 is secured to the side of the permanent magnet 36 opposite to the side where it is secured to the housing 32 by means of, for example, the attracting force of the permanent magnet 36, with a predetermined gap length L_{g1}' to the pole piece 34 maintained therebetween. This member is deflected up and down by an external force.

This movable member 37 is made of a magnetic spring material such as precipitation-hardened stainless steel, iron-nickel alloy, and iron-chromium-cobalt alloy which has both spring properties and magnetic properties including a high saturation magnetic flux density and is magnetized to have only one polarity, i.e., is magnetized as either s- or n-pole.

In order that a great force will not be exerted on the secured portion of the movable member 37 near the outer diameter portion thereof when this member is deflected, it is formed in a configuration having a plurality of slits 37a, 37b, 37c, and 37d in the form of a spiral as shown in Fig. 5 or is formed by press-molding concentric waveforms.

The nozzle 35 is connected through a conduit 38 to a restrictor 39 to which a supply air pressure Pₛ is externally supplied, and a nozzle back pressure generated by the restrictor 39 is taken out through a conduit 40. Further, the housing 32 is formed with an outlet 41 in communication with the outside thereof.

The lower housing 33 has an outer diameter portion in the form of a cylinder which is integrally secured to the outer diameter portion of the housing 32. A cylindrical pole piece 42 made of a soft magnetic material is secured at the center thereof, with a predetermined gap length L_{g2}' to the movable member 37 maintained. A coil 43 through which a current signal I flows is wound around this pole piece 42.

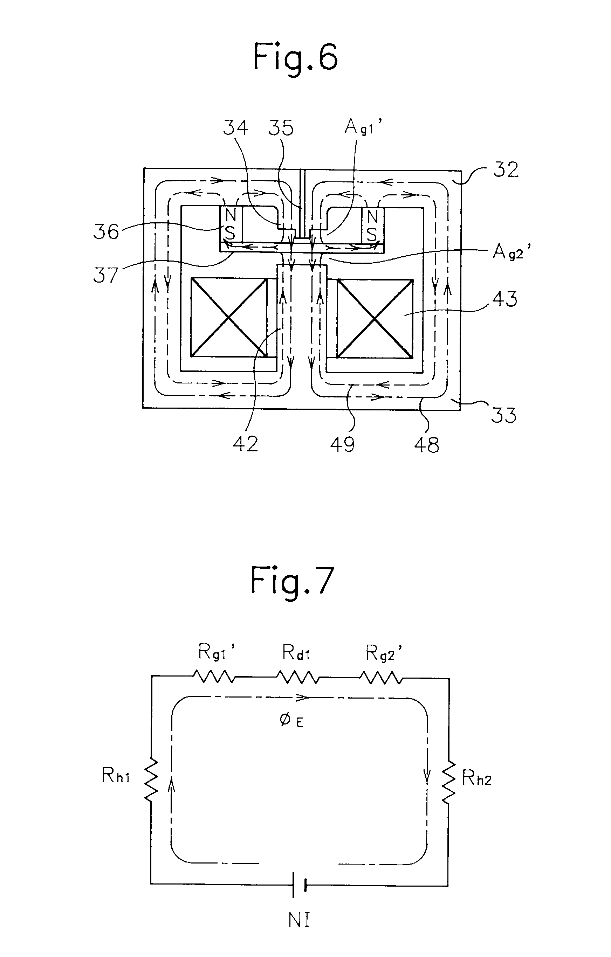

The operation of the embodiment shown in Fig. 4 having such a configuration will now be described with reference to the illustration of operational principles and equivalent magnetic circuit diagrams shown in Fig. 6 through Fig. 8. In Fig. 6, magnetic flux φ_{E} generated by the coil 43 flows through the upper and lower housings 32 and 33 and the pole pieces 34 and 42 along the paths indicated by the dashed line 48.

Specifically, the magnetic flux which has exited the pole piece 34 flows through an air gap A_{g1}', the movable member 37 in the direction of the thickness thereof, and then an air gap A_{g2}', the pole piece 42, the housing 33 and 32, and the pole piece 34. Thus, magnetic flux φ_{E} is formed in both of the air gaps A_{g1}' and A_{g2}' in the same direction (in an downward direction in this case).

The reason is that the movable member 37 is substantially saturated in the horizontal direction in parallel with the surface thereof because it is magnetized by the permanent magnet 36 and is made sufficiently thin, i.e., about 0.05 to 0.5 mm so that it can be easily deflected up and down and that the movable member 37 is connected to the housing 32 through the permanent magnet 36 and the horizontal length thereof is sufficiently larger than the air gaps A_{g1}' and A_{g2}'.

An magnetic flux diagram equivalent to the magnetic flux φ_{E} generated by the coil 43 is shown in Fig. 7. In this figure, N designates the number of the turns of the coil 43; I designates an input current; R_{g1}' designates the magnetic resistance of the air gap A_{g1}'; R_{g2}' designates the magnetic resistance of the air gap A_{g2}'; R_{d1} designates the magnetic resistance in the direction of the thickness of the movable member 37; and Rₕ₁ and Rₕ₂ designate the magnetic resistance of the housings 32 and 33, respectively.

The magnetic flux φ_{E} is given by the following equation.${\text{φ}}_{\text{E}} {\text{= NI/(R}}_{\text{g1}} {\text{' + R}}_{\text{g2}} {\text{' + R}}_{\text{d1}} {\text{+ R}}_{\text{h1}} {\text{+ R}}_{\text{h2}} \text{)}$

Consider that Rg' = R_{g1}' = R_{g2}' and Rₕ = Rₕ₁ = Rₕ₂; the relative magnetic permeability of the movable members 37 and the housings 32 and 33 is on the order of 10³ to 10⁴; and Rg' 〉〉 R_{d1} and R_{g}' 〉〉 Rₕ because the magnetic flux φ_{E} flows through the movable member 37 in the direction of the thickness thereof. Then, the magnetic flux φ_{E} is given as follows.${\text{φ}}_{\text{E}} {\text{= NI/2R}}_{\text{g}} \text{'}$

Therefore, the magnetic flux φ_{E} is substantially dominated by the resistance of the air gaps and is substantially free from the influence of the non-linearity and hysteresis of the soft magnetic material constituting the movable member 37. Thus, it is proportionate to the input current I.

If the permanent magnet 36 is disposed so that the surface thereof in contact with the housing 32 serves as the n-pole and the surface thereof in contact with the movable member 37 serves as the s-pole as shown in Fig. 6, the magnetic flux φ_{E} generated by the permanent magnet 36 flows through the housings 32 and 33, the pole pieces 34 and 42 and the movable member 37 along the path indicated by the broken line 49.

Specifically, the flowing directions of the magnetic flux φ_{E} through the air gaps A_{g1}' and A_{g2}' are opposite to each other, i.e., it flows through the air gap A_{g1}' downwardly and flows through the air gap A_{g2}' upwardly. In the paths for the magnetic flux up to the air gaps A_{g1}' and A_{g2}', the lengths of the magnetic paths are different between the housings 32 and 33 and between the pole pieces 34 and 42. However, since the magnetic resistance is substantially determined by the air gaps and the movable member 37 for both of these paths, the magnetic flux φ_{d} flows through these air gaps with the same magnitude but in opposite directions.

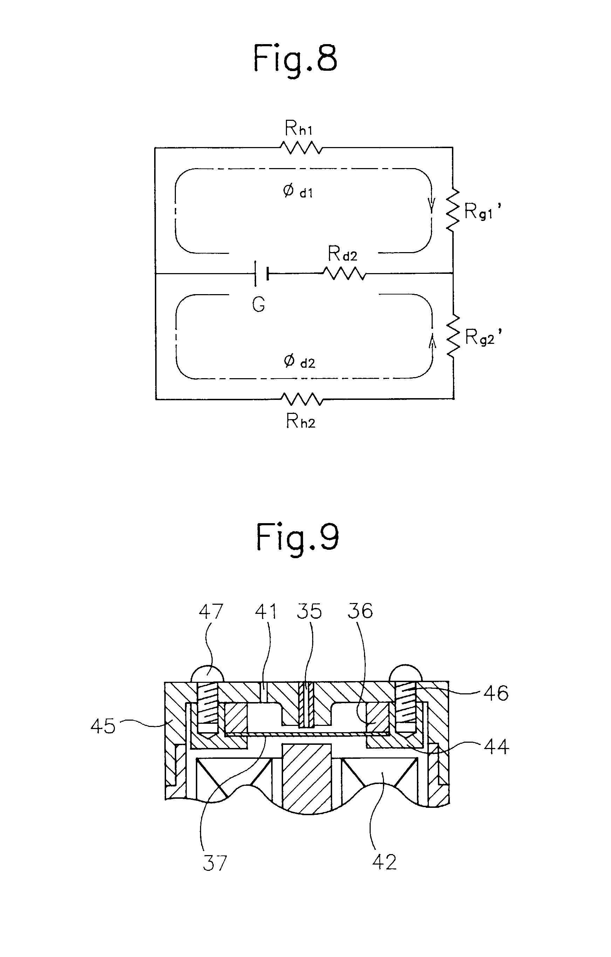

A magnetic circuit diagram equivalent to the magnetic flux φ_{d} generated by the permanent magnet 36 is shown in Fig. 8 wherein G designates a magnetomotive force produced by the permanent magnet 36 and R_{d2} designates magnetic resistance in a direction parallel to the surface of the movable member 37. The magnetic flux φ_{d1} and φ_{d2} flowing through these air gaps are given by the following equations.${\text{φ}}_{\text{d1}} {\text{= G(R}}_{\text{g2}} {\text{' + R}}_{\text{h2}} {\text{)/[R}}_{\text{d2}} {\text{(R}}_{\text{g1}} {\text{' + R}}_{\text{h1}} \text{)} {\text{+ R}}_{\text{d2}} {\text{(R}}_{\text{g2}} {\text{' + R}}_{\text{h2}} \text{)} {\text{+ (R}}_{\text{g1}} {\text{' + R}}_{\text{h1}} {\text{)(R}}_{\text{g2}} {\text{' + R}}_{\text{h2}} \text{)]}$${\text{φ}}_{\text{d2}} {\text{= G(R}}_{\text{g1}} {\text{' + R}}_{\text{h1}} {\text{)/[R}}_{\text{d2}} {\text{(R}}_{\text{g1}} {\text{' + R}}_{\text{h1}} \text{)} {\text{+ R}}_{\text{d2}} {\text{(R}}_{\text{g2}} {\text{' + R}}_{\text{h2}} \text{)} {\text{+ (R}}_{\text{g1}} {\text{' + R}}_{\text{h1}} {\text{)(R}}_{\text{g2}} {\text{' + R}}_{\text{h2}} \text{)]}$

The following equation can be derived from the above equations by dividing the numerators and denominators on the right side of the above equations by R_{g2}' on the assumption that R_{g}' = R_{g1}' = R_{g2}'; Rₕ₁/R_{g}' 〈〈 1; and Rₕ₂/R_{g}' 〈〈 1.${\text{φ}}_{\text{d1}} {\text{= φ}}_{\text{d2}} {\text{= φ}}_{\text{d}} {\text{= G/(2R}}_{\text{d2}} {\text{+ R}}_{\text{g}} \text{')}$

Therefore, the magnetic flux φ_{d} flows through the air gaps A_{g1}' and A_{g2}' above and under the movable member 37 in opposite directions with substantially constant magnitude.

It is apparent from the above that summative magnetic flux (φ_{E} + φ_{d}) and differential magnetic flux (φ_{E} - φ_{d}) flow through the air gaps A_{g1}' and A_{g2}' above and under the movable member 37, respectively.

Since a force F produced between magnetic elements is proportionate to the square of the magnetic flux, an upward force is exerted on the movable member 37.${\text{F}}^{\text{oc}} {\text{(φ}}_{\text{E}} {\text{+ φ}}_{\text{d}} {\text{)}}^{\text{2}} {\text{- (φ}}_{\text{E}} {\text{- φ}}_{\text{d}} {\text{)}}^{\text{2}} {\text{= K}}_{\text{M}} {\text{· φ}}_{\text{E}} {\text{· φ}}_{\text{d}}$

The movable member 37 is configured so that it is deflected in an up and down direction in proportion to upward and downward forces that it receives. Therefore, it has a spring constant K in an up and down direction. So, displacement δ as given by the following equation occurs when a force F is exerted on it.${\text{δ = F/K = K}}_{\text{M}} {\text{· φ}}_{\text{E}} {\text{· φ}}_{\text{d}} \text{/K}$

In the above equation, K_{M} and K are constants. The magnetic flux φ_{d} of the permanent magnet 36 is substantially constant because the displacement δ is sufficiently small relative to the lengths of the air gaps A_{g1}' and A_{g2}'. Since the magnetic flux φ_{E} generated by the coil 43 is proportionate to the input current I, the displacement δ, i.e., the gap between the nozzle 35 and the movable member 37 is proportionate to the input current I. As a result, the nozzle back pressure Pₒ which is the output pressure is proportionate to the input current I.

Thus, the magnetic flux φ_{E} generated by the coil 43 flows through the movable member 37 only in the direction of the thickness thereof in the embodiment shown in Fig. 4. This makes it possible to significantly reduce the mass of the movable member 37 which is a movable portion. In addition, since the movable member 37 itself can be deformed by a magnetic force, there is no need for a weight for maintaining balance.

Since the movable member 37 is secured at a small number of securing points, it can be simply and reliably secured. Further, it is easy to cover the entire areas wherein magnetic forces are generated with a soft magnetic material. This makes it possible to provide an electricity/air pressure converter which is compact, inexpensive and highly stable.

Such an electricity/air pressure converter is significantly advantageous when it is applied to an electropneumatic positioner wherein a feedback signal is negative-fed-back by converting it into an electrical signal as shown in Fig. 3 or an electricity/air pressure converting element of an electricity/air pressure converter.

Although the housings 32 and 33 described with reference to the embodiment shown in Fig. 4 have a cylindrical outer diameter portion, the present invention is not limited thereto and any other configuration such as a rectangular configuration may be employed as long as a space can be defined therein.

It is not necessary to make the housings 32 and 33 from a magnetic material so that they completely separate the inside and outside thereof. They may be partially made of a non-magnetic material and may include gaps as long as portions thereof made of a soft magnetic material are connected in an area equal to or larger than a predetermined value.

Although the nozzle 35 has been described as an element which is separate from the housing 32, the present invention is not limited thereto and it may be configured integrally with the housing. Further, although the nozzle 35 is provided on the pole piece 34 in the foregoing description, the present invention is not limited thereto and it may be provided, for example, on the pole piece 42.

Although the outlet 41 is provided on the housing 32 in the foregoing description, it may be provided on the housing 33 or the area wherein the housings 32 and 33 are joined.

The permanent magnet 36 has been described as doughnut-shaped. The present invention is not limited thereto, and it is possible to employ a configuration wherein a plurality of permanent magnets magnetized in an up and down direction are arranged in the form of a circle.

Fig. 9 is a partial sectional view showing a modification on the securing structure of the movable member. In the structure shown in Fig. 4, the movable member 37 is secured by the attracting force of the permanent magnet 36. In the configuration shown in Fig. 9, the outer diameter portion of the movable member 37 is further held by a circular securing member 44 made of a non-magnetic material and is secured using bolts 46 and 47 from the outside of the housing 45.

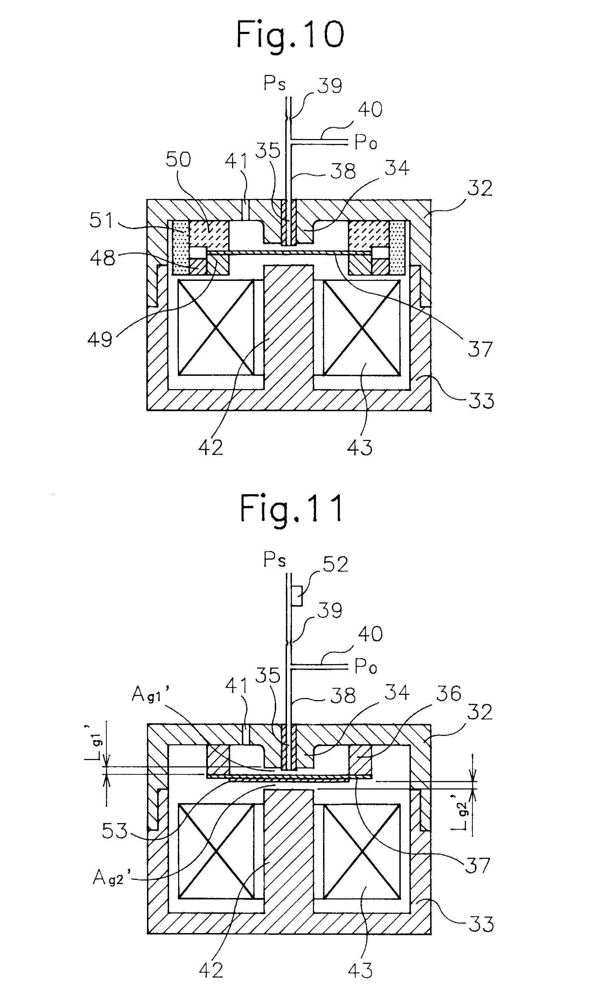

Fig. 10 shows another modification on the embodiment shown in Fig. 1. Parts having functions identical to those of the elements in Fig. 4 are designated by like reference numbers and description is appropriately omitted for such parts.

This embodiment is different from the embodiment in Fig. 1 in that a circular permanent magnet 48 is magnetized in the radial direction thereof (the horizontal direction in the figure) instead of the vertical direction. The movable member 37 is mounted to a circular member 49 made of a soft magnetic material which is secured to an inner surface of the upper portion of the housing 32 through a circular member 50 made of a non-magnetic material such as austenited stainless steel, copper alloy, and aluminum alloy.

A member 51 made of a soft magnetic material is mounted on the outer side surface of the permanent magnet 48, and an end face of the member 51 is secured to the upper housing 32 so that the magnetic flux generated by the permanent magnet 48 flows through the housings 32 and 33.

Such a configuration also provides magnetic flux which flows through the upper and lower air gaps in opposite directions with a substantially constant magnitude, resulting in the same advantages as those obtained in the case shown in Fig. 4,

Further, this configuration allows the movable member 37 to be sandwiched between the metals. This is advantageous not only in that the movable member can be more reliably secured but also in that high precision processing is not required on the permanent magnet 48 which is somewhat difficult to process compared to metals.

Fig. 11 shows another partial modification on the embodiment shown in Fig. 4. In this case, a magnet 52 is secured to the conduit externally communicating with the restrictor 39 and an elastic film 53 is provided on the movable member 37.

This magnet 52 is provided to prevent any magnetic material included in the supply air pressure Pₛ externally supplied from entering the nozzle 35 and the movable member 37 acting as a flapper.

The elastic film 53 is formed of, for example, a rubber sheet and is disposed in contact with the movable member 37 to prevent self-excited vibration of the movable member 37 due to the air blown out from the nozzle 35.

In general, the air blown out from the nozzle 35 includes unsteady flow vibration components in a wide frequency range because the air undergoes a transition from steep contraction to steep expansion in the flow path thereof. Such vibration components can exert a force on the movable member 37, thereby causing a vibration near the resonance point of the movable member 37 having spring properties.

Such a vibration can fatigue the movable member 37 and can cause deterioration of the characteristics of the same due to positional shifts in the securing points thereof. So, damping is performed by applying a thin film made of rubber such as silicon to prevent the vibration, thereby stabilizing the characteristics.

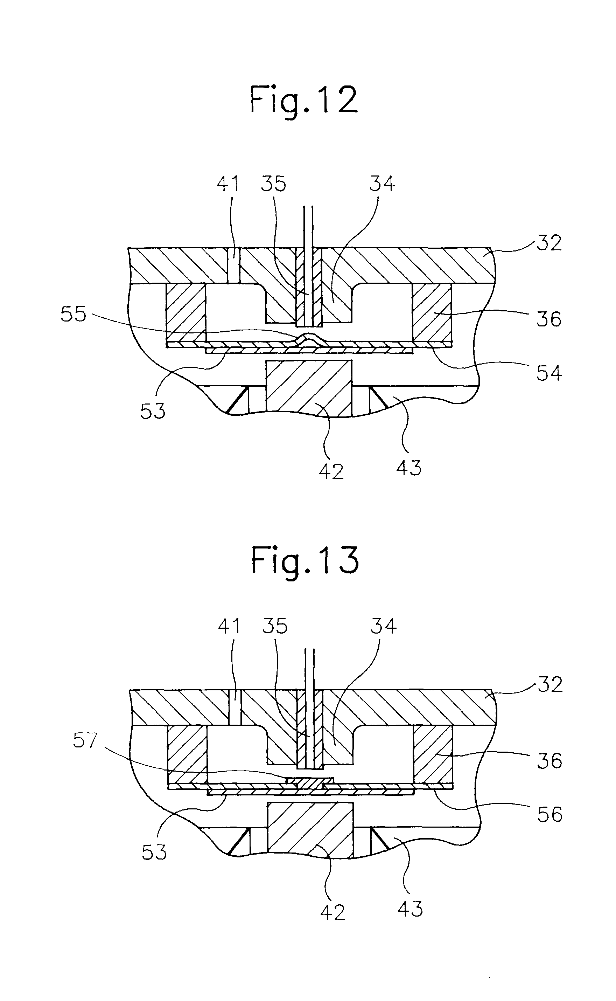

Fig. 12 shows an alternative to the partial configuration for preventing a vibration shown in Fig. 11. In this configuration, a convex portion 55 in the form of a sphere or a circular cone is provided on a movable member 54 facing the nozzle 35 to prevent the air blown out from the nozzle 35 from causing self-excited vibration of the movable member 54.

With such a configuration, the air blown out from the nozzle 35 after being subjected to abrupt contraction therein will be gradually expanded by the convex portion 55 in the form of a sphere or circular cone. This makes it possible to reduce the vibration energy of the flow from the nozzle 35 and, consequently, to obtain stable characteristics.

Fig. 13 shows another partial embodiment for preventing absorption of magnetic powder entering from the outside, wherein a disc-shaped non-magnetic member 57 is secured to the portion of a movable member 56 facing the nozzle 35.

The non-magnetic member 57 prevents magnetic powder entering from the outside from being absorbed by the movable member 56 which is made of a magnetic material. In this case, the non-magnetic member 57 is preferably made of a material of low specific gravity such as aluminum and titanium in order not to decrease the resonance frequency.

As specifically described with reference to the preferred embodiments thereof, the present invention provides various advantages as shown below.
(A) Since the magnetic flux generated by the coil flows through the movable member only in the direction of the thickness thereof, the thickness of the movable member can be reduced. This makes it possible to reduce the mass of the member and, consequently, to provide a stable electricity/air pressure converter which is excellent in anti-vibration, anti-shock, and control characteristics.
(B) The magnetic circuit through which the magnetic flux generated by the coil and the magnetic flux generated by the permanent magnet flow is closed, and the air gaps generating a force are covered by a magnetic material as a whole. This eliminates the need for providing a magnetic shield member for shielding them from the outside and makes it possible to provide an electricity/air pressure converter which is stable also against external magnetic disturbances with a compact size and low cost.
(C) The movable member is secured at only one point on the circumferential surface thereof. Even if a positional shift associated with thermal expansion coefficients occurs on the securing surface, since the direction of the securing surface is perpendicular to the direction of the gap in the nozzle, the influence of such a positional shift can be reduced. Thus, it is possible to provide an electricity/air pressure converter which is stable against temperature changes and the like.
(D) Although there is a possibility that the housings, pole pieces, and movable member will shift in the horizontal direction relative to the axis of assembly, their positions in the vertical direction which significantly affect the characteristics of the device can be determined according to the processing accuracy of each of these components. This simplifies the assembly and reduces the time required for the assembly. As a result, a low-cost electricity/air pressure converter can be provided.
(E) Since the mass of the movable member can be significantly reduced, it is possible to raise the resonance point thereof to a frequency in the range from 500 Hz to 1500 Hz which scarcely occurs in environments wherein electricity/air pressure converters are normally used.
(F) Since the movable member is configured to be linearly displaced in an up and down direction instead of being rotated, there is no need for a weight for balancing this member and, at the same time, the movable member itself can be made compact. This makes it possible to make the converter compact as a whole.

While the present invention has been shown and described with reference to the foregoing preferred embodiment and variations thereof, it will be apparent to those skilled in the art that other changes in form and detail may be made therein without departing from the scope of the invention as defined in the appended claims.

## Claims

1. An electricity/air pressure converter comprising a pair of housings (32,33) made at least partially of a soft magnetic material, in the middle of which first and second pole pieces (34,42) are disposed so that they face each other with an air gap therebetween, and which have an outer circumferential portion,
a permanent magnet (36) secured to one of said housings (32,33) at one end thereof so that it surrounds one of said pole pieces (34, 42),
a movable member (37) made of a magnetic material having spring properties which is secured to the other end of said permanent magnet (36) and which is disposed so as to face said first and second pole pieces (34,42) keeping a first (Ag₁') and a second gap (Ag₂') from said first and second pole pieces (34,42), respectively,
a coil (43) which is wound around the other housing (33, 32) so that it surrounds said pole pieces (34,42) and through which a current signal (J) flows,
and a nozzle (35) which is disposed so that it faces said movable member (37) around the center of either of said pole pieces (34,42) and which is in communication with one end of a restrictor (39) which is supplied with a supply air pressure (Ps) at the other end thereof, whereby said movable member is displaced by a force based on the difference between the square of a summative magnetic flux (φ_{E} + φ_{d}) and the square of a differential magnetic flux (φ_{E} - φ_{d}) formed in said first gap (Ag₁') or said second gap (Ag₂') by said current signal (J) and said permanent magnet (36) so as to generate at said nozzle (35) a nozzle back pressure (Po) which is then outputted as an air pressure signal.

2. The electricity/air pressure converter according to claim 1, wherein said movable member (37) is a plate-shaped member having a plurality of spiral slits (37a-37d) formed therein.

3. The electricity/air pressure converter according to claim 1 or 2, wherein said movable member (37) is a plate-shaped member which has been concentrically press-molded.

4. The electricity/air pressure converter according to claim 1, 2 or 3, wherein said permanent magnet (36) is formed of a hard magnetic material having a large energy product.

5. The electricity/air pressure converter according to claim 1, 2, 3 or 4, wherein said permanent magnet (36) is magnetized in the axial direction of said pole pieces (34, 42).

6. The electricity/air pressure converter according to claim 1, 2, 3 or 4, wherein said permanent magnet (36) is magnetized and secured in a direction perpendicular to the axial direction of said pole pieces (34,42).

7. The electricity/air pressure converter according to one of the claims 1 to 6, wherein an outlet (41) in communication with the outside is provided on at least either of said housings (32,33).

8. The electricity/sir pressure converter according to one of the claims 1 to 7, wherein a magnet is provided in a conduit through which said supply air pressure is supplied.

9. The electricity/air pressure converter according to one of the claims 1 to 8, wherein an elastic film (53) is provided on said movable member (37).

10. The electricity/air pressure converter according to one of the claims 1 to 9, wherein a convex portion (55) is provided at the portion of said movable member (54) facing the nozzle (35).

11. The electricity/air pressure converter according to claim 10, wherein said convex portion (55) is in the form of a sphere or circular cone.

12. The electricity/air pressure converter according to one of the claims 1 to 9, wherein a non-magnetic member (57) is provided at the portion of said movable member (56) facing the nozzle (35).

## Patentansprüche

1. Elektropneumatischer Wandler, umfassend ein Paar von zumindest teilweise aus weichem magnetischem Material hergestellten Gehäusen (32,33), in deren Mitte erste und zweite Polstücke (34,42) mit einem Luftspalt dazwischen einander gegenüberliegend angeordnet sind, und die einen äußeren Umfangsabschnitt aufweisen,
einen an einem der Gehäuse (32,33) an einem Ende desselben so befestigten Permanentmagnet (36), daß dieser eines der Polstücke (34,42) umgibt,
ein aus einem magnetischen Material mit federnden Eigenschaften hergestelltes, bewegbares Element (37), das am anderen Ende des Permanentmagneten (36) befestigt und derart angeordnet ist, daß es den ersten und zweiten Polstücken (34,42) gegenüberliegt, wobei ein erster (Ag₁') und ein zweiter Spaltabstand (Ag₂') zum ersten bzw. zum zweiten Polstück (34) bzw. (42) eingehalten ist,
eine Spule (43), welche so um das andere (der) Gehäuse (33,32) gewunden ist, daß sie die Polstücke (34,42) umgibt, und durch welche ein Stromsignal (J) fließt, und
eine Düse (35), welche so angeordnet ist, daß sie dem bewegbaren Element (37) um die Mitte eines der Polstücke (34,42) herum gegenüberliegt, und welche mit einem Ende eines Restriktors bzw. eines Kapillarrohrs (39) in Verbindung steht, der bzw. das an seinem anderen Ende mit einem Versorgungsluftdruck (Ps) versorgt wird, wodurch das bewegbare Element durch eine Kraft bewegt wird, die auf der Differenz zwischen dem Quadrat eines Summen-Magnetflusses (φ_{E} + φ_{d}) und dem Quadrat eines Differential-Magnetflusses (φ_{E} - φ_{d}) basiert, welche sich im ersten Spalt (Ag₁') oder im zweiten Spalt (Ag₂') durch das Stromsignal (J) und den Permanentmagneten (36) bilden, so daß an der Düse (35) ein Düsenrückstaudruck (Po) erzeugt wird, der sodann als Luftdrucksignal ausgegeben wird.

2. Elektropneumatischer Wandler nach Anspruch 1, wobei das bewegbare Element (37) ein plattenförmiges Teil mit einer Anzahl von darin ausgebildeten, spiralförmigen Schlitzen (37a-37d) ist.

3. Elektropneumatischer Wandler nach Anspruch 1 oder 2, wobei das bewegbare Element (37) ein plattenförmiges Teil ist, das konzentrisch preßgeformt wurde.

4. Elektropneumatischer Wandler nach Anspruch 1, 2 oder 3, wobei der Permanentmagnet (36) aus einem harten magnetischen Material mit einem hohen Leistungsprodukt gebildet ist.

5. Elektropneumatischer Wandler nach Anspruch 1, 2, 3 oder 4, wobei der Permanentmagnet (36) in der Axialrichtung der Polstücke (34,42) magnetisiert ist.

6. Elektiopneumatischer Wandler nach Anspruch 1, 2, 3 oder 4, wobei der Permanentmagnet (36) in einer zur Axialrichtung der Polstücke (34,42) lotrechten Richtung magnetisiert und befestigt ist.

7. Elektropneumatischer Wandler nach einem der Ansprüche 1 bis 6, wobei eine mit der Außenseite in Verbindung stehende Auslaßöffnung (41) mindestens an einem der Gehäuse (32,33) vorgesehen ist.

8. Elektropneumatischer Wandler nach einem der Ansprüche 1 bis 7, wobei ein Magnet in einer Leitung vorgesehen ist, durch welche der Versorgungsluftdruck zugeführt wird.

9. Elektropneumatischer Wandler nach einem der Ansprüche 1 bis 8, wobei an dem bewegbaren Element (37) ein elastischer Film (53) vorgesehen ist.

10. Elektropneumatischer Wandler nach einem der Ansprüche 1 bis 9, wobei ein konvexer Abschnitt (55) an dem der Düse (35) gegenüberliegenden Abschnitt des bewegbaren Elements (54) vorgesehen ist.

11. Elektropneumatischer Wandler nach Anspruch 10, wobei der konvexe Abschnitt (55) die Form einer Kugel oder eines kreisförmigen Konus aufweist.

12. Elektropneumatischer Wandler nach einem der Ansprüche 1 bis 9, wobei ein nicht-magnetisches Teil (57) an dem der Düse (35) gegenüberliegenden Abschnitt des bewegbaren Elements (56) vorgesehen ist.

## Revendications

1. Un convertisseur électro-pneumatique comprenant une paire de boîtiers (32, 33) réalisés au moins partiellement en un matériau magnétiquement doux, au centre desquels sont disposées des première et deuxième pièces polaires (34, 42), de manière à être tournées l'une vers l'autre en laissant subsister entre elles un intervalle, et ayant une partie circonférentielle extérieure,
un aimant permanent (36), fixé à l'un desdits boîtiers (32, 33) à l'un de ses extrémités, de manière à entourer l'une desdites pièces polaires (34, 42),
un organe mobile (37) réalisé en un matériau magnétique ayant des propriétés élastiques, fixé à l'autre extrémité dudit aimant permanent (36), et disposé de manière à être tourné vers lesdites première et deuxième pièces polaires (34, 42) en laissant subsister un premier intervalle (Ag₁') et un deuxième intervalle (Ag₂') vis-à-vis desdites première et deuxième pièces polaires (34, 42) respectivement,
une bobine (43) enroulée autour de l'autre boîtier (33, 32), de manière à entourer lesdites pièces polaires (34, 42) et par laquelle un signal électrique (J) est passé,
et une buse (35) disposée de manière à être tournée vers ledit organe mobile (37), autour du centre de l'une ou l'autre desdites pièces polaires (34, 42), et mise en communication avec une extrémité d'un élément d'étranglement (39) alimenté avec une pression d'air d'alimentation (Ps) à son autre extrémité, de manière que ledit organe mobile soit déplacé par une force basée sur la différence entre le carré d'un flux magnétique sommatif (φ_{E} + φ_{d}) et le carré d'un flux magnétique différentiel (φ_{E} - φ_{d}) formé dans ledit premier intervalle (Ag₁') ou ledit deuxième intervalle (Ag₂') par ledit signal électrique (J) et ledit aimant permanent (36), de manière à générer au niveau de ladite buse (35) une contre-pression de buse (Po) qui est ensuite envoyée à titre de signal de pression d'air.

2. Le convertisseur électro-pneumatique selon la revendication 1, dans lequel ledit organe mobile (37) est un organe en forme de plaque doté d'une pluralité de fentes spirales (37a-37d) formées en son sein.

3. Le convertisseur électro-pneumatique selon la revendication 1 ou 2, dans lequel ledit organe mobile (37) est un organe en forme de plaque moulé sous pression, concentriquement.

4. Le convertisseur signal électro-pneumatique selon la revendication 1, 2 ou 3, dans lequel ledit aimant permanent (36) est formé d'un matériau magnétiquement dur, ayant un produit énergétique élevé.

5. Le convertisseur signal électro-pneumatique selon la revendication 1, 2, 3 ou 4, dans lequel ledit aimant permanent (36) est magnétisé dans la direction axiale desdites pièces polaires (34, 42).

6. Le convertisseur signal électro-pneumatique selon la revendication 1, 2, 3 ou 4, dans lequel ledit aimant permanent (36) est magnétisé et fixé dans une direction perpendiculaire à la direction axiale desdites pièces polaires (34, 42).

7. Le convertisseur signal électro-pneumatique selon l'une des revendications 1 à 6, dans lequel une sortie (41) mise en communication avec l'extérieur est fournie sur au moins l'un desdits boîtiers (32, 33).

8. Le convertisseur signal électro-pneumatique selon l'une des revendications 1 à 7, dans lequel un aimant est prévu dans un conduit à travers lequel ladite pression d'alimentation est fournie.

9. Le convertisseur électro-pneumatique selon l'une des revendications 1 à 8, dans lequel un film élastique (53) est prévu sur ledit organe mobile (37).

10. Le convertisseur signal électro-pneumatique selon l'une des revendications 1 à 9, dans lequel une partie convexe (55) est prévue sur la partie dudit organe mobile (54) qui est tournée vers la buse (35).

11. Le convertisseur signal électro-pneumatique selon la revendication 10, dans lequel ladite partie convexe (55) se présente sous la forme d'une sphère ou d'un cône circulaire.

12. Le convertisseur signal électro-pneumatique selon l'une des revendications 1 à 9, dans lequel un organe non magnétique (57) est prévu sur la partie dudit organe mobile (56) tournée vers la buse (35).
